# EUROPÄISCHE PATENTSCHRIFT

(11) **EP 1 442 231 B1**
(45) Veröffentlichungstag und Bekanntmachung des Hinweises auf die Patenterteilung: **08.08.2007**
(21) Anmeldenummer: 02782809.4
(22) Anmeldetag: 02.10.2002
(51) Int. Cl.: F16H 3/00

(54) **LAGERUNG DER EINGANGSWELLEN EINES DOPPELKUPPLUNGSGETRIEBES**
MOUNTING OF THE INPUT SHAFTS OF A TWIN CLUTCH TRANSMISSION
MONTAGE SUR PALIER DES ARBRES D'ENTREE D'UNE TRANSMISSION A DOUBLE EMBRAYAGE

(30) Priorität: 26.10.2001 DE 10153014
(43) Veröffentlichungstag der Anmeldung: 04.08.2004
(73) Patentinhaber: Volkswagen Aktiengesellschaft, 38436 Wolfsburg (DE)
(72) Erfinder: AHRENS, Rainer, 38124 Braunschweig (DE)
(74) Vertreter: Hübsch, Dirk
(86) Internationale Anmeldenummer: PCT/EP2002/011036
(87) Internationale Veröffentlichungsnummer: WO 2003/038304

(56) Entgegenhaltungen:
- EP-A- 0 206 734
- DE-A- 3 626 179
- DE-A- 4 123 493
- DE-C- 19 860 251
- US-A- 2 396 456
- US-A- 2 485 688

## Beschreibung

Die Erfindung betrifft eine Lagerung der Eingangswellen eines Doppelkupplungsgetriebes, insbesondere eines Kraftfahrzeuges, entsprechend dem Oberbegriff des Anspruchs 1 und wie aus dem US 2396456 bekannt ist.

Lagerungen dienen zum Tragen und Führen beweglicher Bauteile, wie z.B. von Wellen und Naben, und können aus Gleitlagern oder aus Wälzlagern aufgebaut sein. Die jeweilige Ausbildung und Anordnung einer Lagerung orientiert sich im wesentlichen an den Betriebsbedingungen, den auftretenden Belastungen, dem zur Verfügung stehenden Bauraum, und dem vorgegebenen Kostenrahmen. In Kraftfahrzeuggetrieben und zugeordneten Kupplungseinheiten werden aufgrund ihrer Wartungsfreiheit und hoher Betriebssicherheit bevorzugt Wälzlager, z.B. in Form von Kugellagern, Zylinderrollenlagern, Kegelrollenlagern, und Nadellagern, verwendet, die überdies weitgehend genormt sind und daher in großer Stückzahl preiswert herstellbar bzw. beziehbar sind.

So wird beispielsweise in der DE 39 28 133 A1 ein Geschwindigkeitswechselgetriebe für ein Kraftfahrzeug beschrieben, das aus einem normalen Gangwechselgetriebe besteht, dem zur Bereitstellung mindestens einer weiteren Übersetzungsstufe ein Untersetzungsgetriebe nachgeschaltet ist. Das Untersetzungsgetriebe ist als einfaches Planetengetriebe mit einem Sonnenrad, einem Planetenradträger, und einem Ringrad ausgebildet und über eine doppelseitig wirksame Lamellenkupplung schaltbar. Zugeordnete Bauteile, wie z.B. eine mit dem Ringrad verbundene Hohlwelle und ein mit dem Sonnenrad verbundener Lamellenträger, sind jeweils durch mehrere als Zylinderrollenlager ausgebildete Radial- und Axiallager gegenüber feststehenden und /oder rotierenden Bauteilen gelagert. Des weiteren ist aus der DE 100 04 195 A1 eine aus zwei Lamellenkupplungen aufgebaute Doppelkupplungseinrichtung bekannt, bei der ein motorseitiger Lamellenträger in ähnlicher Weise über mehrere Radial- und Axiallager gegenüber einer Eingangswelle des zugeordneten Getriebes, einem getriebeseitigen Lamellenträger, und einem Gehäusedeckel gelagert ist. Diese bekannten Lagerungen sind entsprechend den vorliegenden Anwendungsfällen auf die Lagerung axial kürzerer und radial größerer nabenartiger Bauteile mit scheibenförmigen Abschnitten ausgelegt und nicht ohne weiteres auf die Lagerung von Wellen übertragbar. Eine längere Getriebewelle ist zur Vermeidung von Fluchtungsfehlern und größeren Biegemomenten im allgemeinen mehrfach gelagert, wobei zum verspannungsfreien Einbau und zum Ausgleich von Wärmedehnungen nur eines der Lager als Festlager ausgebildet sein darf, über das die Getriebewelle axial geführt wird und auftretende Axialkräfte aufgenommen werden.

Schließlich wird in der DE 41 23 493 A1 eine Lagerung von Getriebewellen eines Kraftfahrzeuggetriebes vorgeschlagen, das als Doppelkupplungsgetriebe in Vorgelegebauart ausgeführt ist, d.h. bei dem die koaxial zueinander angeordneten Eingangswellen in Linie und somit ebenfalls koaxial zu der Abtriebswelle angeordnet sind und die Kraftübertragung mit Ausnahme des Direktgangs von einer der Eingangswellen über ein erstes Zahnradpaar in eine Vorgelegewelle und von dort über ein zweites Zahnradpaar in die Abtriebswelle erfolgt. Die zentral angeordnete erste Eingangswelle ist über ein Radial-Nadellager (Loslager) auf einer motorseitigen Hauptantriebswelle und in einem als Hohlwelle ausgebildeten Abschnitt, in dem zwei Zahnradkränze angeordnet sind, über ein Radial-Zylinderrollenlager (Loslager) und ein als zweireihiges Schrägkugellager ausgebildetes Festlager auf der Abtriebswelle gelagert. Die als Hohlwelle ausgebildete und über der ersten Eingangswelle angeordnete zweite Eingangswelle mit einem Zahnradkranz ist über ein Radial-Nadellager (Loslager) und ein Radial-Zylinderrollenlager (Loslager) auf der ersten Eingangswelle und über ein als einreihiges Rillenkugellager ausgebildetes Festlager in einer Gehäusewand des Getriebegehäuses gelagert. Alternativ dazu wird vorgeschlagen, die zweite Eingangswelle über ein Radial-Nadellager (Loslager) und ein als einreihiges Rillenkugellager ausgebildetes Festlager auf der ersten Eingangswelle und über ein Radial-Zylinderrollenlager (Loslager) in der Gehäusewand zu lagern. Zusammen mit einem als zweireihiges Schrägkugellager ausgebildeten Festlager, mit dem die Abtriebswelle gehäusefest gelagert ist, ergibt sich durch diese bekannten Lagerungen nachteilig ein insbesondere in axialer Richtung großer Bauraumbedarf, d.h. das betreffende Getriebe ist u.a. aufgrund der Lagerung ungünstig lang ausgebildet und somit für einen Quereinbau der aus dem Antriebsmotor und dem Getriebe gebildeten Antriebseinheit ungeeignet.

Der vorliegenden Erfindung liegt nun das Problem zu Grunde, eine Lagerung der Eingangswellen eines Doppelkupplungsgetriebes der eingangs genannten Bauart zur Verfügung zu stellen, die mit niedrigen Fertigungskosten und geringer Toleranzempfindlichkeit im Hinblick auf einen Quereinbau der Antriebseinheit insbesondere in axialer Richtung möglichst wenig Bauraum in Anspruch nimmt.

Das Problem wird erfindungsgemäß durch die Merkmale des Anspruches 1 gelöst.

Vorteilhafte Ausgestaltungen der erfindungsgemäßen Lagerung sind in den Unteransprüchen 2 bis 9 aufgeführt.

Mit der erfindungsgemäßen Lagerung wird im Vergleich zum Stand der Technik mindestens ein Festlager in Form eines einreihigen Rillenkugellagers oder eines zweireihigen Schrägkugellagers eingespart, mit dem die zweite Eingangswelle üblicherweise in einer Gehäusewand des Getriebegehäuses oder auf der ersten Eingangswelle gelagert ist. Da ein derartiges Kugellager in radialer und axialer Richtung relativ viel Bauraum erfordert und eine relativ genaue und aufwendige Fertigung der Lagersitze erfordert, werden durch die Einsparung des Festlagers sowohl Bauraum als auch Fertigungskosten gespart. Das verbleibende Festwälzlager, mit dem die erste Eingangswelle gehäusefest gelagert ist, wird aus Platzgründen auf der dem Antriebsmotor abgewandten Seite zwischen dem entsprechenden Wellenende der Eingangswelle und der äußeren Gehäusewand des Getriebegehäuses angeordnet und zur Reduzierung des axialen Platzbedarfes zweckmäßig als einreihiges Rillenkugellager ausgebildet. Die zweite Eingangswelle ist über die beiden inneren Radialwälzlager und die beiden Axialwälzlager im wesentlichen auf der ersten Eingangswelle gelagert und bildet mit dieser eine vormontierbare Baugruppe, wogegen das äußere Radialwälzlager hauptsächlich als Loslager der ersten Eingangswelle wirksam ist, auch wenn es zwischen der zweiten Eingangswelle und der inneren Gehäusewand angeordnet ist. Eine motorseitig in der ersten Eingangswelle wirksame Radialkraft wird über die beiden inneren Radialwälzlager auf die zweite Eingangswelle übertragen und von dieser über das äußere Radialwälzlager in das Getriebegehäuse eingeleitet. Dabei ist es zur Vermeidung von in der zweiten Eingangswelle wirksamen Biegemomenten zweckmäßig, wenn das äußere Radialwälzlager und eines der inneren Radialwälzlager radial gegenüberliegend zueinander angeordnet sind, d.h. eine axial weitgehend identische Lage auf der zweiten Eingangswelle haben, so daß die Übertragung der Radialkraft praktisch unmittelbar von dem inneren in das äußere Radialwälzlager erfolgt. Um für die beiden Eingangswellen bei gegebenem Lagerspiel der Radialwälzlager möglichst geringe Kippbewegungen zu erreichen, sollte der axiale Abstand zwischen dem Festwälzlager und den radial gegenüberliegenden Radialwälzlagern möglichst groß ausgelegt sein. Demzufolge ist das äußere Radialwälzlager vorteilhaft radial gegenüber dem motorseitigen inneren Radialwälzlager und nicht gegenüber dem motorabgewandten inneren Radialwälzlager angeordnet. Die Radialwälzlager sind bevorzugt als Zylinderrollenlager ausgebildet, da diese Bauart insbesondere in radialer Richtung eine geringe Bauhöhe aufweist und als genormtes Bauteil preiswert bezogen werden kann.

Die beiden Axialwälzlager sind vorteilhaft jeweils zwischen einander zugewandten Radialflächen eines radialen Lagersteges der ersten und eines radialen Lagersteges der zweiten Eingangswelle angeordnet, wodurch aufgrund der starren Verbindung zu den Eingangswellen eine gute Übertragung auftretender Axialkräfte von der zweiten in die erste Eingangswelle erreicht wird und zusätzliche Lagerungs- und Sicherungselemente, wie z.B. Lagerscheiben und Sicherungsringe, eingespart werden können. Bei entsprechender Bearbeitung können die Radialflächen auch unmittelbar als Lagerflächen genutzt werden, auf denen die Wälzkörper der Axialwälzlager abrollen, wodurch in axialer Richtung Bauraum eingespart wird. Zum Ausgleich von Fertigungstoleranzen zwischen den Radial- bzw. Lagerflächen der beiden Eingangswellen ist es besonders zweckmäßig, wenn zwischen einem der Axialwälzlager und einer der zugeordneten Radialflächen die Anordnung einer Distanzscheibe vorgesehen wird. Distanzscheiben sind als geschliffene Blechscheiben in fein abgestuften Dicken preiswert herstellbar, so daß bei der Montage der beiden Eingangswellen ein Ausgleich der jeweiligen Längenabweichung in einfacher Weise möglich ist. Somit können bei der Fertigung der Eingangswellen größere Fertigungstoleranzen zugelassen werden, wodurch die Produktionskosten des Getriebes gesenkt werden. Zur Vermeidung von Bauraum beanspruchenden separaten Lagerstegen wird das motorseitige Axialwälzlager vorteilhaft zwischen einem fest mit der ersten Eingangswelle verbundenen Kupplungsträger der ersten Motorkupplung und einem fest mit der zweiten Eingangswelle verbundenen Kupplungsträger der zweiten Motorkupplung angeordnet. Aus demselben Grund wird das motorabgewandte Axialwälzlager vorteilhaft zwischen dem motorseitig ersten Gangrad der ersten Eingangswelle und dem gegenüberliegenden motorabgewandt ersten Gangrad der zweiten Eingangswelle angeordnet, wobei die betreffenden Gangräder zur Vermeidung zusätzlicher Axiallager zwischen den Gangrädern und den Eingangswellen als Festräder ausgebildet sein sollten. Die Axialwälzlager sind bevorzugt als Axialnadellager ausgebildet, die bezogen auf die Drehachse der Eingangswellen eine axial geringe Bauhöhe aufweisen und als Normteil preiswert herstellbar bzw. beziehbar sind.

Weitere Einzelheiten der Erfindung ergeben sich aus der nachfolgenden ausführlichen Beschreibung und der beigefügten Zeichnung, die beispielhaft zur Erläuterung der erfindungsgemäßen Lagerung dient.

Hierzu zeigt:

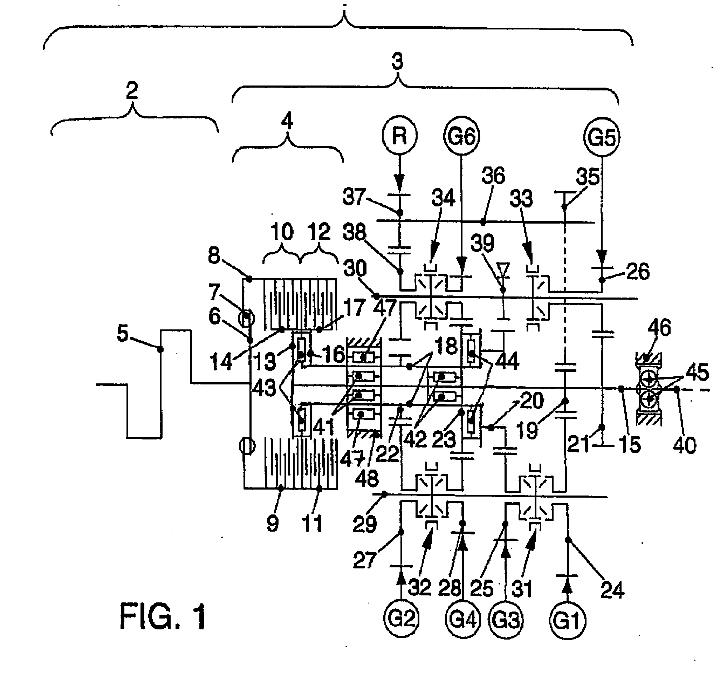

- Figur 1: eine aus einem Antriebsmotor und einem Doppelkupplungsgetriebe bestehende Antriebseinheit in schematischer Darstellung.

In Fig. 1 ist eine Antriebseinheit 1 eines Kraftfahrzeuges dargestellt, die aus einem Antriebsmotor 2 und einem Doppelkupplungsgetriebe 3 mit einer zugeordneten Kupplungseinheit 4 besteht. Der Antriebsmotor 2 ist als Verbrennungsmotor ausgebildet und wird durch eine Kurbelwelle 5 symbolisiert. Die Kurbelwelle 5 steht über eine Schwungscheibe 6 und einen Drehschwingungsdämpfer 7 mit einem Kupplungskorb 8 der Kupplungseinheit 4 in Verbindung. Der Kupplungskorb 8 weist einen ersten motorseitigen Lamellenträger 9, der einer als Lamellenkupplung ausgebildeten ersten Motorkupplung 10 zugeordnet ist, und einen zweiten motorseitigen Lamellenträger 11 auf, der einer als Lamellenkupplung ausgebildeten zweiten Motorkupplung 12 zugeordnet ist. Ein erster Kupplungsträger 13 der ersten Motorkupplung 10, der einen ersten getriebeseitigen Lamellenträger 14 aufweist, ist mit einer zentral angeordneten ersten Eingangswelle 15 des Doppelkupplungsgetriebes 3 verbunden. Ein zweiter Kupplungsträger 16 der zweiten Motorkupplung 12, der einen zweiten getriebeseitigen Lamellenträger 17 aufweist, ist mit einer zweiten Eingangswelle 18 des Doppelkupplungsgetriebes 3 verbunden, wobei die zweite Eingangswelle 18 als Hohlwelle ausgebildet ist und koaxial über der ersten Eingangswelle 15 angeordnet ist. Die erste Eingangswelle 15 weist mehrere Gangräder 19, 20, 21 einer ersten Gruppe von Gängen auf, die durch die ungeraden Vorwärtsgänge, d.h. den ersten Vorwärtsgang G1, den dritten Vorwärtsgang G3, und den fünften Vorwärtsgang G5, gebildet wird. Die zweite Eingangswelle 18 weist mehrere Gangräder 22, 23 einer zweiten Gruppe von Gängen auf, die durch die geraden Vorwärtsgänge, d.h. den zweiten Vorwärtsgang G2 und den vierten Vorwärtsgang G4, gebildet wird. Die Gangräder 19 - 23 sind jeweils als Festräder ausgebildet, d.h. starr (drehfest und axialfest) mit der betreffenden Eingangswelle 15 bzw. 18 verbunden, und stehen mit jeweils einem zugeordneten Gegengangrad 24 - 28 in Eingriff. Die Gegengangräder 24 - 28 sind als Losräder ausgebildet und auf zwei parallel zu den Eingangswellen 15, 18 angeordnete Triebwellen 29, 30 verteilt, d.h. auf diesen drehbar gelagert. Die Gänge G1 - G4 sind der ersten Triebwelle 29 zugeordnet und durch doppelseitig wirksame Gangkupplungsvorrichtungen 31, 32 einlegbar, wobei beim Einlegen eines Gangs durch das Schließen der Gangkupplungsvorrichtung jeweils eine drehfeste Verbindung zwischen dem betreffenden Losrad (Gegengangrad) und der Triebwelle hergestellt wird. Die Gänge G5 und G6 sind der zweiten Triebwelle 30 zugeordnet und durch eine einfach wirksame Gangkupplungsvorrichtung 33 bzw. durch eine doppelseitig wirksame Gangkupplungsvorrichtung 34 einlegbar. Der Rückwärtsgang R steht über ein mit dem Gangrad 19 des ersten Gangs G1 in Eingriff befindliches erstes Umkehrgangrad 35, eine Nebenwelle 36, und ein zweites Umkehrgangrad 37 mit einem Gegengangrad 38 in Verbindung, das auf der zweiten Triebwelle 30 drehbar gelagert ist und durch die Gangkupplungsvorrichtung 34 einlegbar ist. Schließlich ist auf der zweiten Triebwelle 30 noch als Parksperre wirksames sperrbares Festrad 39 angeordnet.

Um eine kompakte Bauweise des Doppelkupplungsgetriebes 3 zu erreichen, sind die Triebwellen 29, 30 tatsächlich V-förmig um die Drehachse 40 der Eingangswellen 15, 18 angeordnet, und die Nebenwelle 36 liegt gedreht um die zweite Triebwelle 30 weiter innen. In Fig. 1 sind die Triebwellen 29, 30 und die Nebenwelle 36 zur Vereinfachung der Darstellung in die Zeichenebene aufgefaltet abgebildet. Die Triebwellen 29, 30 stehen über jeweils ein Abtriebsrad (nicht abgebildet) mit einem Differentialgetriebe (nicht abgebildet) in Verbindung, von dem aus dass Abtriebsdrehmoment des Doppelkupplungsgetriebes auf die Antriebsräder des zugeordneten Kraftfahrzeuges verteilt wird. Ein Schaltvorgang von einem eingelegten alten Gang in einen neuen Gang erfolgt im Normalfall durch einen Wechsel der Eingangswelle ohne Zugkraftunterbrechung, und zwar dadurch, das der neue, der anderen Eingangswelle zugeordnete Gang bei geöffneter Motorkupplung eingelegt wird, dann zeitlich überschnitten die dem alten Gang zugeordnete Motorkupplung geöffnet und die dem neuen Gang zugeordnete Motorkupplung geschlossen wird, und schließlich der alte Gang ausgelegt wird.

Erfindungsgemäß ist die zweite Eingangswelle 18 über zwei bevorzugt als Zylinderrollenlager ausgebildete innere Radialwälzlager 41, 42, ein motorseitiges inneres Radialwälzlager 41 und ein motorabgewandtes inneres Radialwälzlager 42, zur Aufnahme von Radialkräften und über zwei bevorzugt als Axialnadellager ausgebildete entgegengerichtet wirksame Axialwälzlager 43, 44, ein motorseitiges Axialwälzlager 43 und ein motorabgewandtes Axialwälzlager 44, zur Aufnahme von Axialkräften auf der ersten Eingangswelle 15 drehbar und axial fixiert gelagert. Die erste Eingangswelle 15 ist motorabgewandt über ein bevorzugt als einreihiges Rillenkugellager ausgebildetes Festwälzlager 45 axial fixiert in einer äußeren Gehäusewand 46 eines nicht abgebildeten Getriebegehäuses drehbar gelagert und motorseitig über ein auf der zweiten Eingangswelle 18 angeordnetes, bevorzugt als Zylinderrollenlager ausgebildetes, äußeres Radialwälzlager 47 axial verschiebbar in einer inneren Gehäusewand 48 des Getriebegehäuses oder eines nicht abgebildeten Kupplungsgehäuses drehbar gelagert. Das äußere Radialwälzlager 47 ist radial gegenüber dem motorseitigen inneren Radialwälzlager 41 angeordnet, so daß eine motorseitige Radialkraft unmittelbar und ohne eine Biegebeanspruchung der zweiten Eingangswelle 18 von der ersten Eingangswelle 15 über das motorseitige innere Radialwälzlager 41 und das äußere Radialwälzlager 47 in die innere Gehäusewand 48 übertragen wird. Darüber hinaus ergibt sich durch den größtmöglichen axialen Abstand des Festwälzlagers 45 zu dem äußeren Radialwälzlager 47 eine hohe Stabilität gegen Kippbewegungen der ersten Eingangswelle 15 und der auf dieser gelagerten zweiten Eingangswelle 18. Das motorseitige Axialwälzlager 43 ist zwischen dem fest mit der ersten Eingangswelle 15 verbundenen Kupplungsträger 13 der ersten Motorkupplung 10 und dem fest mit der zweiten Eingangswelle 18 verbundenen Kupplungsträger 16 der zweiten Motorkupplung 12 angeordnet, und das motorabgewandte Axialwälzlager 44 ist zwischen dem fest mit der ersten Eingangswelle 15 verbundenen Gangrad 20 des dritten Gangs G3 und dem gegenüberliegenden, fest mit der zweiten Eingangswelle 18 verbundenen Gangrad 23 des vierten Gangs G4 angeordnet, wodurch jeweils zwei separate radiale Lagerstege auf den Eingangswellen 15, 18 vermieden und insbesondere in axialer Richtung Bauraum eingespart wird. Zum Ausgleich axialer Fertigungstoleranzen der beiden Eingangswellen 15, 18 kann zwischen einem der Axialwälzlager 43, 44 und einer der zugeordneten Radial- bzw. Lagerflächen eine Distanzscheibe (nicht abgebildet), z.B. in Form einer präzise geschliffenen Blechscheibe, angeordnet werden, so daß zur Senkung der Fertigungskosten größere Fertigungstoleranzen der Eingangswellen 15, 18 zugelassen werden können. Durch die erfindungsgemäße Lagerung wird besonders axialer Bauraum eingespart, so daß das Doppelkupplungsgetriebe 3 im Hinblick auf einen Quereinbau der Antriebseinheit 1 besonders kurz ausgebildet werden kann.

Darüber hinaus sind die Fertigungskosten durch die Verwendung weitgehend genormter Wälzlager und der zulässigen hohen Fertigungstoleranzen der Eingangswellen 15, 18 relativ niedrig.

### BEZUGSZEICHENLISTE

- 1: Antriebseinheit
- 2: Antriebsmotor
- 3: Doppelkupplungsgetriebe
- 4: Kupplungseinheit
- 5: Kurbelwelle
- 6: Schwungscheibe
- 7: Drehschwingungsdämpfer
- 8: Kupplungskorb
- 9: erster motorseitiger Lamellenträger
- 10: erste Motorkupplung .
- 11: zweiter motorseitiger Lamellenträger
- 12: zweite Motorkupplung
- 13: erster Kupplungsträger
- 14: erster getriebeseitiger Lamellenträger
- 15: erste Eingangswelle
- 16: zweiter Kupplungsträger
- 17: zweiter getriebeseitiger Lamellenträger
- 18: zweite Eingangswelle
- 19: Gangrad (von G1 und R)
- 20: Gangrad (von G3)
- 21: Gangrad (von G5)
- 22: Gangrad (von G2)
- 23: Gangrad (von G4)
- 24: Gegengangrad (von G1)
- 25: Gegengangrad (von G3)
- 26: Gegengangrad (von G5)
- 27: Gegengangrad (von G2)
- 28: Gegengangrad (von G4)
- 29: erste Triebwelle
- 30: zweite Triebwelle
- 31: Gangkupplungsvorrichtung (von G1 und G3)
- 32: Gangkupplungsvorrichtung (von G2 und G4)
- 33: Gangkupplungsvorrichtung (von G5)
- 34: Gangkupplungsvorrichtung (von G6 und R)
- 35: erstes Umkehrgangrad (von R)
- 36: Nebenwelle
- 37: zweites Umkehrgangrad (von R)
- 38: Gegengangrad (von R)
- 39: Festrad
- 40: Drehachse
- 41: motorseitiges inneres Radialwälzlager
- 42: motorabgewandtes inneres Radialwälzlager
- 43: motorseitiges Axialwälzlager
- 44: motorabgewandtes Axialwälzlager
- 45: Festwälzlager
- 46: äußere Gehäusewand
- 47: äußeres Radialwälzlager
- 48: innere Gehäusewand
- G1: erster (Vorwärts-)Gang
- G2: zweiter (Vorwärts-)Gang
- G3: dritter (Vorwärts-)Gang
- G4: vierter (Vorwärts-)Gang
- G5: fünfter (Vorwärts-)Gang
- R: Rückwärtsgang

## Patentansprüche

1. Lagerung der Eingangswellen eines Doppelkupplungsgetriebes, insbesondere eines Kraftfahrzeuges, mit einer ersten Eingangswelle (15), die motorseitig außerhalb eines Getriebegehäuses mit einer ersten Motorkupplung (10) in Verbindung steht und innerhalb des Getriebegehäuses mehrere Gangräder (19, 20, 21) einer ersten Gruppe von Gängen (G1, G3, G5) aufweist, mit einer als Hohlwelle ausgebildeten und koaxial über der ersten Eingangswelle (15) angeordneten zweiten Eingangswelle (18), die motorseitig außerhalb des Getriebegehäuses mit einer zweiten Motorkupplung (12) in Verbindung steht und innerhalb des Getriebegehäuses mehrere Gangräder (22, 23) einer zweiten Gruppe von Gängen (G2, G4) aufweist, und mit mindestens einer parallel zu den beiden Eingangswellen angeordneten Triebwelle (29, 30), die mit den Gangrädern (19 - 23) der Eingangswellen in Eingriff befindliche Gegengangräder (24 - 28) aufweist, wobei die erste Eingangswelle (15) motorabgewandt über ein Festwälzlager (45) axial fixiert in einer äußeren Gehäusewand (46) drehbar gelagert und motorseitig über ein auf der zweiten Eingangswelle (18) angeordnetes äußeres Radialwälzlager (47) axial verschiebbar in einer inneren Gehäusewand (48) drehbar gelagert ist, **dadurch gekennzeichnet, dass** die zweite Eingangswelle (18) über mindestens zwei innere Radialwälzlager (41, 42) und zwei entgegengerichtet wirksame, ein motorseitiges und ein motorabgewandtes, Axialwälzlager (43, 44) auf der ersten Eingangswelle (15) drehbar und axial fixiert gelagert ist, und dass das motorseitige Axialwälzlager (43) zwischen einem fest mit der ersten Eingangswelle (15) verbundenen Kupplungsträger (13) der ersten Motorkupplung (10) und einem fest mit der zweiten Eingangswelle (18) verbundenen Kupplungsträger (16) der zweiten Motorkupplung (12) angeordnet ist.

2. Lagerung nach Anspruch 1, **dadurch gekennzeichnet, daß** das Festwälzlager (45) als einreihiges Rillenkugellager ausgebildet ist.

3. Lagerung nach Anspruch 1 oder 2, **dadurch gekennzeichnet, daß** das äußere Radialwälzlager (47) und eines der inneren Radialwälzlager (41, 42) radial gegenüberliegend zueinander angeordnet sind.

4. Lagerung nach Anspruch 3, **dadurch gekennzeichnet, daß** das äußere Radialwälzlager (47) radial gegenüber dem motorseitigen inneren Radialwälzlager (41) angeordnet ist.

5. Lagerung nach einem der Ansprüche 1 bis 4, **dadurch gekennzeichnet, daß** mindestens eines der Radialwälzlager (41, 42, 47) als Zylinderrollenlager ausgebildet ist.

6. Lagerung nach einem der Ansprüche 1 bis 5, **dadurch gekennzeichnet, daß** die beiden Axialwälzlager (43, 44) jeweils zwischen einander zugewandten Radialflächen eines radialen Lagersteges der ersten Eingangswelle (15) und eines radialen Lagersteges der zweiten Eingangswelle (18) angeordnet sind.

7. Lagerung nach Anspruch 6, **dadurch gekennzeichnet, daß** zwischen einem der Axialwälzlager (43, 44) und einer der zugeordneten Radialflächen zum Ausgleich axialer Fertigungstoleranzen der Eingangswellen (15, 18) die Anordnung einer Distanzscheibe vorgesehen ist.

8. Lagerung nach einem der Ansprüche 6 bis 7, **dadurch gekennzeichnet, daß** das motorabgewandte Axialwälzlager (44) zwischen dem motorseitig ersten Gangrad (20) der ersten Eingangswelle (15) und dem gegenüberliegenden motorabgewandt ersten Gangrad (23) der zweiten Eingangswelle (18) angeordnet ist, wobei die betreffenden Gangräder (20, 23) bevorzugt als Festräder ausgebildet sind.

9. Lagerung nach einem der Ansprüche 1 bis 8, **dadurch gekennzeichnet, daß** mindestens eines der Axialwälzlager (43, 44) als Axialnadellager ausgebildet ist.

## Claims

1. Bearing system for the input shafts of a double-clutch transmission, in particular of a motor vehicle, having a first input shaft (15) which is connected at the engine end to a first engine clutch (10) outside a transmission housing, and has, within the transmission housing, a plurality of gear wheels (19, 20, 21) of a first group of gear speeds (G1, G3, G5), having a second input shaft (18) which is embodied as a hollow shaft, is arranged coaxially above the first input shaft (15), is connected at the engine end to a second engine clutch (12) outside the transmission housing, and has, inside the transmission housing, a plurality of gear wheels (22, 23) of a second group of gear speeds (G2, G4), and having at least one drive shaft (29, 30) which is arranged in parallel with the two input shafts and has corresponding gear wheels (24 - 28) which are in engagement with the gear wheels (19 - 23) of the input shafts, the first input shaft (15) being mounted in a rotatable fashion, axially secured in an external housing wall (46), at the end remote from the engine by means of a fixed roller bearing (45), and being mounted in a rotatable fashion, so as to be axially displaceable in an internal housing wall (48), at the engine end by means of an external radial roller bearing (47) which is arranged on the second input shaft (18), **characterized in that** the second input shaft (18) is mounted in a rotatable and axially secured fashion on the first input shaft (15) by means of at least two internal radial roller bearings (41, 42) and two axial roller bearings (43, 44), one at the end remote from the engine and one at the engine end, which are effective in the opposite direction, and **in that** the axial roller bearing (43) at the engine end is arranged between a clutch carrier (13), permanently connected to the first input shaft (15), of the first engine clutch (10) and a clutch carrier (16), permanently connected to the second input shaft (18), of the second engine clutch (12).

2. Bearing system according to Claim 1, **characterized in that** the fixed roller bearing (45) is embodied as a single-row deep groove ball bearing.

3. Bearing system according to Claim 1 or 2, **characterized in that** the external radial roller bearing (47) and one of the internal radial roller bearings (41, 42) are arranged radially opposite one another.

4. Bearing system according to Claim 3, **characterized in that** the external radial roller bearing (47) is arranged radially opposite the internal radial roller bearing (41) at the engine end.

5. Bearing system according to one of Claims 1 to 4, **characterized in that** at least one of the radial roller bearings (41, 42, 47) is embodied as a cylindrical roller bearing.

6. Bearing system according to one of Claims 1 to 5, **characterized in that** the two axial roller bearings (43, 44) are each arranged between radial faces, facing one another, of a radial bearing web of the first input shaft (15) and of a radial bearing web of the second input shaft (18).

7. Bearing system according to Claim 6, **characterized in that** there is provision for a spacing washer to be arranged between one of the axial roller bearings (43, 44) and one of the assigned radial faces in order to compensate axial fabrication tolerances of the input shafts (15, 18).

8. Bearing system according to one of Claims 6 to 7, **characterized in that** the axial roller bearing (44) at the end remote from the engine is arranged between the first gear wheel (20), at the engine end, of the first input shaft (15) and the first gear wheel (23), at the opposite end remote from the engine, of the second input shaft (18), the respective gear wheels (20, 23) being preferably embodied as fixed gear wheels.

9. Bearing system according to one of Claims 1 to 8, **characterized in that** at least one of the axial roller bearings (43, 44) is embodied as an axial needle bearing.

## Revendications

1. Montage sur palier des arbres d'entrée d'une transmission à double embrayage, en particulier d'un véhicule automobile, comportant un premier arbre d'entrée (15), qui est en liaison côté moteur avec un premier embrayage de moteur (10) à l'extérieur du carter d'une boîte de vitesses et qui comprend plusieurs roues de rapport (19, 20, 21) d'un premier groupe de rapports (G1, G3, G5) à l'intérieur du carter de la boîte de vitesses, comportant un deuxième arbre d'entrée (18) formé par un arbre creux et disposé coaxialement au-dessus du premier arbre d'entrée (15), qui est en liaison côté moteur avec un deuxième embrayage de moteur (12) à l'extérieur du carter de la boîte de vitesses et qui comprend plusieurs roues de rapport (22, 23) d'un deuxième groupe de rapports (G2, G4) à l'extérieur du carter de la boîte de vitesses, et comportant au moins un arbre de commande (29, 30) disposé parallèlement aux deux arbres d'entrée, qui comprend des roues de rapport conjuguées (24-28) qui sont en prise avec les roues de rapport (19-23) des arbres d'entrée, dans lequel le premier arbre d'entrée (15) est monté à rotation dans une paroi extérieure (46) du carter en étant fixé axialement à l'opposé du moteur par un palier à roulement fixe (45) et est monté à rotation côté moteur dans une paroi intérieure (48) du carter en étant mobile axialement par un palier à roulement radial extérieur (47) disposé sur le deuxième arbre d'entrée (18), **caractérisé en ce que** le deuxième arbre d'entrée (18) est monté à rotation sur le premier arbre d'entrée (15) en étant fixé axialement par au moins deux paliers à roulement radiaux intérieurs (41, 42) et deux paliers à roulement axiaux (43, 44), un du côté du moteur et un à l'opposé du moteur, agissant en sens contraire, et **en ce que** le palier à roulement axial (43) côté moteur est disposé entre un support d'embrayage (13) du premier embrayage de moteur (10) solidaire du premier arbre d'entrée (15) et un support d'embrayage (16) du deuxième embrayage de moteur (12) solidaire du deuxième arbre d'entrée (18).

2. Montage sur palier selon la revendication 1, **caractérisé en ce que** le palier à roulement fixe (45) est un roulement à billes rainuré à une rangée de billes.

3. Montage sur palier selon la revendication 1 ou 2, **caractérisé en ce que** le palier à roulement radial extérieur (47) et un des paliers à roulement radiaux intérieurs (41, 42) sont disposés radialement en opposition l'un à l'autre.

4. Montage sur palier selon la revendication 3, **caractérisé en ce que** le palier à roulement radial extérieur (47) est disposé radialement par rapport au palier à roulement radial intérieur (41) côté moteur.

5. Montage sur palier selon l'une quelconque des revendications 1 à 4, **caractérisé en ce qu'**au moins un des paliers à roulement radiaux (41, 42, 47) est un roulement à rouleaux cylindriques.

6. Montage sur palier selon l'une quelconque des revendications 1 à 5, **caractérisé en ce que** les deux paliers à roulement axiaux (43, 44) sont disposés respectivement entre des faces radiales tournées l'une vers l'autre d'une nervure radiale du premier arbre d'entrée (15) et d'une nervure radiale du deuxième arbre d'entrée (18).

7. Montage sur palier selon la revendication 6, **caractérisé en ce qu'**il est prévu de placer un disque d'écartement entre un des paliers à roulement axiaux (43, 44) et une des faces radiales associées pour compenser des tolérances de fabrication axiales des arbres d'entrée (15, 18).

8. Montage sur palier selon l'une quelconque des revendications 6 à 7, **caractérisé en ce que** le palier à roulement axial (44) à l'opposé du moteur est disposé entre la première roue de rapport (20) du premier arbre d'entrée (15) côté moteur et la première roue conjuguée opposée (23) du deuxième arbre d'entrée (18) à l'opposé du moteur, les roues de rapport concernées (20, 23) étant de préférence des roues fixes.

9. Montage sur palier selon l'une quelconque des revendications 1 à 8, **caractérisé en ce qu'**au moins un des paliers à roulement axiaux (43, 44) est un roulement à aiguilles axial.
